# EUROPÄISCHE PATENTSCHRIFT

(11) **EP 3 622 357 B1**
(45) Veröffentlichungstag und Bekanntmachung des Hinweises auf die Patenterteilung: **13.10.2021**
(21) Anmeldenummer: 18711549.8
(22) Anmeldetag: 15.03.2018
(51) Int. Cl.: G05B 19/042

(54) **STEUERUNGSSYSTEM ZUM STEUERN VON SICHERHEITSKRITISCHEN UND NICHTSICHERHEITSKRITISCHEN PROZESSEN MIT MASTER-SLAVE-FUNKTIONALITÄT**
CONTROL SYSTEM FOR CONTROLLING SAFETY-CRITICAL AND NON-SAFETY-CRITICAL PROCESSES WITH MASTER-SLAVE FUNCTIONALITY
SYSTÈME DE COMMANDE SERVANT À COMMANDER DES PROCESSUS CRITIQUES POUR LA SÉCURITÉ ET NON-CRITIQUES POUR LA SÉCURITÉ, MUNI D'UNE FONCTIONNALITÉ MAÎTRE-ESCLAVE

(30) Priorität: 09.05.2017 DE 102017109886
(43) Veröffentlichungstag der Anmeldung: 18.03.2020
(73) Patentinhaber: ABB AG, 68309 Mannheim (DE)
(72) Erfinder: VERYHA, Yauheni, 68259 Mannheim (DE); MAIER, Benjamin, 69221 Dossenheim (DE)
(74) Vertreter: Maiwald Patent- und Rechtsanwaltsgesellschaft mbH
(86) Internationale Anmeldenummer: PCT/EP2018/056488
(87) Internationale Veröffentlichungsnummer: WO 2018/206183

(56) Entgegenhaltungen:
- EP-A1- 2 876 510
- DE-A1- 19 928 517
- DE-B3-102009 054 157

## Beschreibung

Die Erfindung betrifft ein, vorzugsweise modular aufgebautes, Steuerungssystem, welches zum Steuern von sicherheitskritischen und nichtsicherheitskritischen Prozessen und/oder Anlagenkomponenten gemäß Anspruch 1 vorgesehen ist. Die Erfindung findet insbesondere Verwendung in der Prozessautomation oder Maschinensteuerung.

Für Automatisierungssysteme zur Steuerung eines technischen Prozesses oder einer technischen Anlage ist es oftmals erforderlich, besondere sicherheitskritische Prozess- oder Anlagenkomponenten getrennt von nichtsicherheitskritischen Komponenten zu steuern.

In der DE 10 2005 009 795 A1 ist ein Mikroprozessorsystem für eine Maschinensteuerung in sicherheitskritischen Anwendungen beschrieben, das zwei Bereiche umfasst. Ein erster Bereich ist für nicht sicherheitskritische bzw. nicht sicherheitsgerichtete Funktionen vorgesehen und umfasst einen Hauptprozessor, einen Programm- und Datenspeicher, eine Eingabe/Ausgabeeinheit und einen Bus zur Verbindung der vorgenannten Komponenten miteinander. Ein zweiter Bereich ist für sicherheitskritische bzw. sicherheitsgerichtete Funktionen vorgesehen und umfasst einen Sicherheitsprozessor mit einem eigenen Programm- und Datenspeicher, der ebenfalls an den Bus angeschlossen ist.

Mittels einer sicheren Übertragungsstrecke werden Programme und Daten in den Datenspeicher des Sicherheitsprozessors geladen, dessen Funktion darauf beruht, dass er im Zusammenwirken mit weiteren sicherheitsgerichteten Komponenten, wie beispielsweise sicherheitsgerichteten Eingabe/Ausgabeeinheiten, die Anlage oder den Prozess im Notfall in einen "sicheren" Zustand fährt.

In der DE 103 53 950 A1 ist ein weiteres Steuerungssystem zum Steuern von sicherheitskritischen Prozessen mit einem Feldbus, einem Busmaster zum Steuern der Kommunikation über den Feldbus und einer Signaleinheit zum Verknüpfen mit dem sicherheitskritischem Prozess beschrieben. Der Busmaster und die Signaleinheit sind über den Feldbus miteinander verbunden. Über den Feldbus wird eine Kommunikation der Signaleinheit mit dem Busmaster bereitgestellt. Weiterhin ist eine erste Steuereinheit zum Steuern des sicherheitskritischen Prozesses vorgesehen, wobei die Signaleinheit und die erste Steuereinheit sicherheitsbezogene Einrichtungen für eine fehlersichere Kommunikation aufweisen, um die sicherheitskritischen Prozesse zu steuern. Die erste Steuereinheit ist feldbusunabhängig an den Busmaster anschließbar.

Die vorab beschriebenen sicherheitsgerichteten Steuerungssysteme sind für einen Einsatz in modular aufgebauten Steuerungssystemen, wie sie beispielsweise in der DE 10 2004 056 363 A1 beschrieben sind, nicht vorgesehen bzw. nur mit einem zusätzlichen Aufwand integrierbar, da beispielsweise Kommunikationsmodule, Schnittstellen, Spannungsversorgungen und Überwachungsfunktionen an die vorgegebenen Sicherheitskriterien anzupassen sind. Dazu müssen diese Komponenten ausgetauscht und mit einer neuen Software ausgerüstet werden, wodurch erhebliche Kosten entstehen.

Die EP 2504739 A1 zeigt ein modular aufgebautes Automatisierungssystem zum Steuern von sicherheitskritischen und nichtsicherheitskritischen Prozessen und/oder Anlagenkomponenten. Dabei ist ein modular aufgebautes, grundsätzlich nicht-sicheres Steuerungssystem zusätzlich mit einem sicherheits-gerichteten Controller ausgestattet, wobei das Steuerungssystem ausgelegt ist, um als Kommunikationsmaster zu agieren.

DE 199 28 517 A1 beschreibt ein Steuerungssystem zum Steuern von sicherheitskritischen Prozessen.

EP 2 876 510 A1 beschreibt eine Sicherheitssteuerung zum sicheren Ein- und Ausschalten eines elektrischen Verbrauchers.

Der Stand der Technik lässt Raum für Verbesserungen. Daher besteht Bedarf nach der vorliegenden Erfindung.

### ZUSAMNIENFASSUNG

Es wird ein Steuerungssystem der eingangs genannten Art mit den im Anspruch 1 angegebenen Merkmalen bereitgestellt. Vorteilhafte Ausgestaltungen und Verbesserungen der erfindungsgemäßen Einrichtung sind in weiteren Ansprüchen und in der Beschreibung angegeben.

### ASPEKTE DER ERFINDUNG

Gemäß einem ersten Ausführungsbeispiel umfasst ein, vorzugsweise modular aufgebautes, Steuerungssystem zum Steuern von sicherheitskritischen und nichtsicherheitskritischen Prozessen und/oder Anlagenkomponenten wenigstens eine erste Steuereinheit, die für die Steuerung des nicht sicherheitskritischen Prozesses und/oder der nicht sicherheitskritischen Anlagenkomponenten vorgesehen ist, sowie wenigstens eine Eingabe-/Ausgabeeinheit, die über einen internen Ein-/Ausgabebus mit der ersten Steuereinheit verbunden ist, und wenigstens einem Kommunikationskoppler, der über einen internen Kopplerbus mit der ersten Steuereinheit verbunden ist und/oder über einen Feldbus mit weiteren dezentralen Einheiten, wie beispielsweise Ein-/Ausgabeeinheiten und/oder Remote-Stationen, verbindbar ist.

Dabei ist wenigstens eine zweite Steuereinheit, im Weiteren auch als Sicherheits-Steuereinheit oder Safety-Controller bezeichnet, für die Steuerung des/der sicherheitskritischen Prozesse(s) und/oder der sicherheitskritischen Anlagenkomponenten vorgesehen.

Das Steuerungssystem ist ausgelegt, um in einem über Feldbus verbundenen Verbund mit anderen Geräten als Kommunikations-Master und als Kommunikations-Slave zu agieren, und umfasst dazu einen Master-Kommunikationskoppler und einen Slave-Kommunikationskoppler, und es ist vorzugsweise modular konfigurierbar, und es weisen die Steuereinheit und die Sicherheits-Steuereinheit jeweils Untereinheiten mit Master-Funktionalität und Untereinheiten mit Slave-Funktionalitäten auf.

Vorzugsweise weist die Sicherheits-Steuereinheit zur Bereitstellung der sicherheitsgerichteten Funktionen wenigstens zwei, vorzugsweise als Mikroprozessor ausgeführte Verarbeitungseinheiten und zur Datenübertragung über den internen Kopplerbus einen ersten, vorzugsweise als Dual-Port-RAM ausgeführten Speicher auf. Der Dual-Port-RAM in der Sicherheits-Steuereinheit ist so ausgeführt, dass an seinen beiden Zugriffsseiten gleichzeitige Lese- und/oder Schreibzugriffe möglich sind, so dass ein gleichzeitiger Zugriff für zwei ansonsten getrennte Systeme möglich ist, die mit gemeinsamen Daten arbeiten ohne dass sich die ansonsten getrennten Systeme gegenseitig in der Zugriffsgeschwindigkeit einschränken. Das Steuerungssystem ist mit Master- und Slave-Funktionalität ausgestattet. Dazu weist das Steuerungssystem sowohl jeweils Master- als auch Slave-Kommunikationskoppler-Funktionalität auf. Dabei können die beiden Funktionalitäten auch in einem Kommunikationskoppler vereinigt sein, der gleichzeitig bzw. quasi-gleichzeitig sowohl als Master- als auch als Slave-Kommunikationskoppler agieren kann. Dementsprechend kann dieser als Modul vorgesehen sein, das sowohl als Master- als auch als Slave-Kommunikationskoppler fungiert. Somit kann das Steuerungssystem mit anderen Steuerungssystemen über Feldbus zu einem komplexen Verbund mit anderen Steuerungssystemen und/oder anderen Feldbus-Geräten verbunden werden. Insbesondere kann ein Steuerungssystem gemäß Ausführungsbeispielen "nach oben" als Slave fungieren und Befehle von einem anderen Steuerungssystem, optional ebenfalls gemäß Ausführungsbeispielen, empfangen, das als Master fungiert. Gleichzeitig kann dieses nach oben als Slave fungierende Steuerungssystem "nach unten" wiederum als Master-Steuerungssystem fungieren und Befehle an ein weiteres Steuerungssystem senden, das dann als Slave fungiert. Ebenso können andere Feldbus-Geräte als Slave fungieren und Befehle von jedem der vorgenannten Steuerungssysteme empfangen, die dabei jeweils als Master fungieren. Es ist leicht ersichtlich, dass auf diese Weise modular und hochflexibel ein Verbund mit einem oder mehreren Steuerungssystemen gemäß Ausführungsbeispielen aufgebaut werden kann, wobei jedes der Steuerungssysteme entweder als Master oder als Slave oder in beiden Rollen agieren kann. Dabei kann in Ausführungsbeispielen die Rolle des Master oder Slave kontextabhängig festgelegt werden, d.h. abhängig von der Funktion und/oder Rolle des jeweiligen über Feldbus angeschlossenen Kommunikationspartners, sei es ein anderes Steuerungssystem, ein beliebiges Feldbus-Gerät oder ähnliches.

Während das Zusammenspiel eines Steuerungssystems gemäß Ausführungsbeispielen mit anderen Steuerungssystemen gemäß Ausführungsbeispielen, oder mit anderen am Feldbus angeschlossenen Steuergeräten, oder anderen Feldbus-Geräten erfindungsgemäß durch die Konfiguration des/der Master-/Slave-Kommunikationskoppler des Steuerungssystems festgelegt wird, ist die Master-/Slave-Eigenschaft typischerweise auch in anderen Modulen bzw. Teilen des Steuerungssystems gemäß Ausführungsbeispielen realisiert. Insbesondere kann die zweite Steuereinheit, die Sicherheits-Steuereinheit, jeweils eine oder mehrere Master-Sicherheits-Untereinheiten und/oder Slave-Sicherheits-Untereinheiten umfassen. Ebenso kann die erste Steuereinheit, die für die Steuerung des/der nicht sicherheitskritischen Prozesse(s) und/oder der nicht sicherheitskritischen Anlagenkomponenten vorgesehen ist, ebenso jeweils eine oder mehrere Master- und/oder Slave-Untereinheiten umfassen.

Gemäß einem Ausführungsbeispiel kommuniziert die Sicherheits-Steuereinheit, optional über ein Dual-Port-RAM, über den internen Kopplerbus mittels bzw. über die nicht-sicherheitskritische erste Steuerungseinheit direkt mit weiteren Kommunikationskopplern anderer Steuerungssysteme, die optional ebenfalls gemäß Ausführungsbeispielen ausgeführt sind. Dabei kann die Sicherheits-Steuereinheit gemäß den obigen Ausführungen in jeder Verbindung zu anderen Systemen entweder als Master oder als Slave fungieren, wobei die jeweils angeschlossenen anderen Steuerungssysteme jeweils konjugiert dazu fungieren bzw. ausgelegt sind.

Ein solches modular aufgebautes Steuerungssystem mit einer ersten Steuereinheit für die Steuerung von nicht sicherheitskritischen Anwendungen und einer zweiten Steuereinheit (Sicherheits-Steuereinheit) für die Steuerung von sicherheitskritischen Anwendungen, sowie der oben beschriebenen Master-/Slave-Funktionalität, kann flexibel in unterschiedlicher Funktion eingesetzt werden, beispielsweise als Steuerungssystem eines größeren Automatisierungssystems in Verbindung mit weiteren Steuerungssystemen gemäß Ausführungsbeispielen, als dezentrale Verarbeitungseinrichtung in einem solchen dezentralisierten größeren Automatisierungssystem, oder als Stand-alone- Automatisierungsgerät in Verbindung mit den lokal ankoppelbaren Ein- /Ausgabegeräten oder als zentrales Automatisierungsgerät.

Ein weiterer Vorteil des Steuerungssystems gemäß Ausführungsbeispielen beruht auf einer Reduzierung der Schnittstellen für die Kommunikation der jeweiligen Steuereinheiten für die sicherheitskritischen und nicht sicherheitskritischen Funktionen. Durch den Einsatz der Sicherheits-Steuereinheit für die Steuerung des/der sicherheitskritischen Prozesse(s) oder der sicherheitskritischen Anlagenkomponenten und der damit verbundenen Trennung der Funktionen zwischen der ersten, nicht-sicherheitsgerichteten Steuereinheit und der Sicherheits-Steuereinheit, werden in der Sicherheits-Steuereinheit die vorhandenen Kommunikationsschnittstellen zur nicht-sicherheitsgerichteten Steuereinheit wiederverwendet, was zur deutlichen Vereinfachung des Designs der Sicherheits-Steuereinheit führt. Dabei erweist es sich als vorteilhaft, dass mit den verwendeten Dual-Port-RAMs vordefinierte Schnittstellen zur Verfügung gestellt werden.

Dabei übernimmt in Ausführungsbeispielen die nicht-sicherheitsgerichtete Steuereinheit die Aufgabe, die sicherheitsgerichteten Telegramme aus der Sicherheits-Steuereinheit des Steuerungssystems über einen internen Kopplerbus und den internen Ein-/Ausgabebus bzw. den als Master-Kommunikationskoppler und/oder als Slave-Kommunikationskoppler (beide für bzw. am Feldbus) ausgeführten Kommunikationskoppler bei einem System-Setup an die sicherheitsgerichteten Ein-/Ausgabeeinheiten unter Verwendung des sogenannten "Black-Channel-Kommunikationsprinzips" zu übergeben. Das Black Channel Kommunikationsprinzip ist beispielsweise aus "PROFIsafe ― Profile for Safety Technology on PROFIBUS DP and PROFINET IO Profile part, related to IEC 61784-3-3 Specification for PROFIBUS and PROFINET. Version 2.4, March, 2007, Order No: 3.192b" bekannt.

Die Feldbus-Master-Kommunikationskoppler sind weiterhin dafür vorgesehen, die sicherheitsgerichteten Telegramme von und zu den dezentralen sicherheitsgerichteten Ein- /Ausgabemodulen und/oder zu den Remote Stationen unter Nutzung des vorgenannten "Black-Channel-Kommunikationsprinzips" zu übertragen, bzw. diese als Feldbus-Slave-Kommunikationskoppler zu empfangen. Dazu werden die Telegramme über einen oder mehrere, sogenannte Feldbus-Slaves zu den sicherheitsgerichteten Ein-/Ausgabeeinheiten geführt. Die Feldbus-Slaves können dazu direkte nicht-sicherheitsgerichtete Ein-/Ausgabekanäle aufweisen.

In der Sicherheits-Steuereinheit wird eine sogenannte Sicherheitsprogrammlogik ausgeführt. Im Controller für die nicht-sicherheitskritischen Anwendungen wird davon getrennt eine nicht-sicherheitsgerichtete Programmlogik ausgeführt. Der - gegebenenfalls wechselseitige - Datenaustausch der Daten für die sicherheitskritischen Anwendungen zwischen der Sicherheits-Steuereinheit und der nicht-sicherheitsgerichteten ersten Steuereinheit erfolgt dabei mittels der vordefinierten Schnittstelle über den Dual-Port-RAM und den Kopplerbus, und zwar unabhängig ob dies im Master- oder im Slave-Betrieb geschieht.

In Ausführungsbeispielen ist dabei von den beiden Prozessoren der Sicherheits-Steuereinheit nur ein Prozessor über den Dual-Port-RAM direkt mit dem internen Kopplerbus verbunden. Die Prozessoren der Sicherheits-Steuereinheit sind so ausgeführt, dass sie sich gegenseitig überwachen und synchronisieren. Die Überwachungs- und Synchronisationsmechanismen können beispielsweise nach "PROFIsafe ― Profile for Safety Technology on PROFIBUS DP and PROFINET IO Profile part, related to IEC 61784-3-3 Specification for PROFIBUS and PROFINET. Version 2.4, March, 2007, Order No: 3.192b" oder ähnlich ausgeführt werden.

Auch kann in der Sicherheits-Steuereinheit eine andere interne Sicherheitsarchitektur als die vorab beschriebene eine 1oo2 (1 von 2)-Architektur, bestehend aus zwei Prozessoren, vorgesehen sein, beispielsweise eine 1oo3-Architektur etc. In der beschriebenen 1oo2-Architektur ist der erste Prozessor, welcher direkt auf das Dual-Port-RAM zugreift, nicht in der Lage ein cyclic redundancy checksum (CRC - ein Verfahren zur Bestimmung eines Prüfwerts für Daten, um Fehler bei der Übertragung oder Speicherung erkennen zu können) zu ermitteln, das zum Generieren von gültigen Telegramme über die Schnittstelle des Dual-Port-RAMs notwendig ist. Diese CRC-Ermittlung kann nur von dem redundanten Prozessor durchgeführt, und dem ersten Prozessor mitgeteilt werden. Hiermit wird sichergestellt, dass beide Prozessoren an gültigen Telegrammen mitwirken. Dies ist erforderlich, um die Sicherheit des Systems bei Ausfall oder fehlerhafter Funktionsweise eines der beiden Prozessoren der Sicherheits-Steuereinheits zu gewährleisten.

Die erfindungsgemäße Aufteilung der nicht-sicherheitsgerichteten, ersten Steuereinheit sowie der Sicherheits-Steuereinheit jeweils in Master- und/oder Slave-Untereinheiten ist dabei typischer-, aber nicht notwendigerweise über Programmlogik realisiert.

### KURZE BESCHREIBUNG DER FIGUREN

Anhand der in der folgenden Figuren dargestellten Ausführungsbeispielen sollen die Erfindung sowie vorteilhafte Ausgestaltungen und Verbesserungen der Erfindung näher erläutert und beschrieben werden.

Es zeigen:
- Fig. 1: zeigt eine beispielhafte Ausführungsform eines erfindungsgemäßen Steuerungssystems mit Master- und/oder Slave-Funktionalität, welches für die Steuerung sicherheitsgerichteter und nicht-sicherheitsgerichteter Prozesse über Feldbus vorgesehen ist, mit einer weiteren, angesteuerten Einheit;
- Fig. 2: zeigt eine detaillierte Ausführungsform eines erfindungsgemäßen Steuerungssystems;
- Fig. 3: zeigt eine Ausführungsform der zweiten Steuereinheit mit 1oo2 Systemarchitektur;
- Fig. 4: zeigt ein Steuerungssystems wie in der Fig. 1, das als Master ein weiteres erfindungsgemäßes Steuergerät sowie eine weitere Einheit jeweils über Feldbus als Slave ansteuert.

### DETAILLIERTE BESCHREIBUNG DER FIGUREN

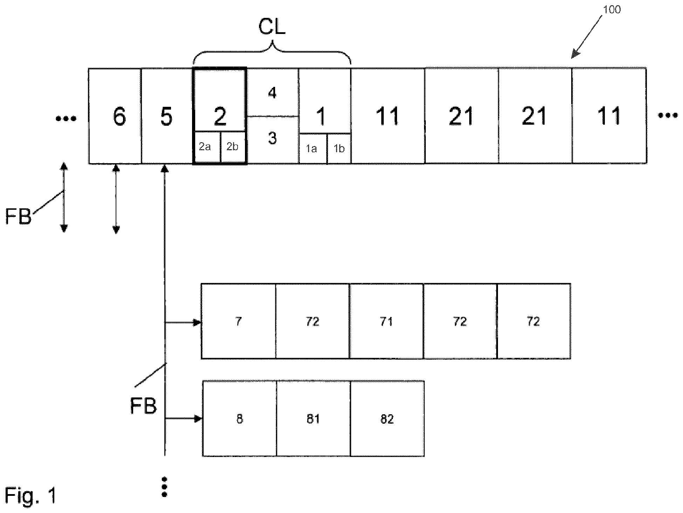

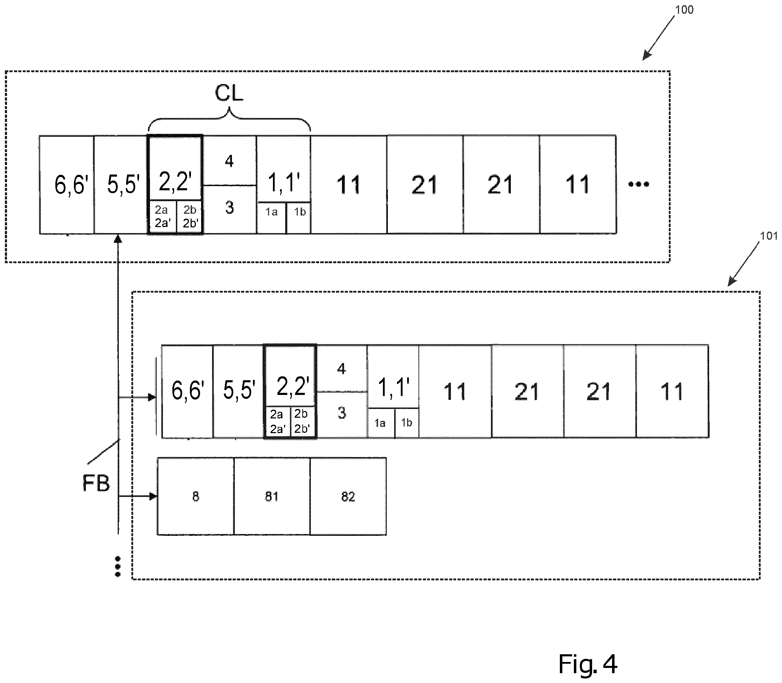

Fig. 1 zeigt ein, vorzugsweise modular aufgebautes, Steuer- bzw. Automatisierungssystem 100, 101 mit einer ersten Steuereinheit 1, die für die Steuerung von nicht sicherheitskritischen Prozessen und/oder nicht sicherheitskritischen Anlagenkomponenten vorgesehen ist. Die erste Steuereinheit 1 besitzt mindestens eine Master-Untereinheit 1a und/oder mindestens eine Slave-Untereinheit 1b, die typischerweise innerhalb der Steuereinheit 1 in Programmlogik realisiert sind. Daran angeschlossene Module der zentralen Eingabe-/Ausgabeeinheiten 11, 21 sind über einen internen Ein-/Ausgabebus (in Fig. 1 nicht gezeigt) mit der ersten Steuereinheit 1 verbunden. Für die Verbindung der Steuereinheit 1 an einen Feldbus FB dient mindestens ein Kommunikationskoppler 5, 6, umfassend mindestens einen Master-Kommunikationskoppler 5 und/oder mindestens einem Slave-Kommunikationskoppler 6, welche über den Feldbus FB die Kommunikation mit einer Vielzahl von dezentralen Feldbus-Slaves 7, 8 und an diesen angeschlossenen Eingabe-/Ausgabeeinheiten 71, 72, 81, 82 übernehmen. Die Ein-/Ausgabeeinheiten 71, 81 bezeichnen non-safety- Ein-/Ausgabeeinheiten, und die Ein-/Ausgabeeinheiten 72, 82 bezeichnen safety-Ein-/Ausgabeeinheiten. Dabei kann gemäß der Nomenklatur der Master-Kommunikationskoppler 5 die Kommunikation steuern, oder der Slave-Kommunikationskoppler 6 von einer Steuereinheit eines anderen Steuerungssystems oder Gerätes gesteuert werden. In Fig. 1 ist nur eine Verbindung des aktiv steuernden Master-Kommunikationskopplers 5 dargestellt, die Verbindung des Slave-Kommunikationskopplers 6 ist dabei optional, dies wird unten mit Bezug auf Fig. 4 genauer behandelt.

Generell ist das Steuerungssystem 100, 101 gemäß Ausführungsbeispielen dazu ausgelegt, in einem über Feldbus FB verbundenen Verbund mit anderen Geräten als Kommunikations-Master und als Kommunikations-Slave zu agieren. Dazu umfasst es einen Master-Kommunikationskoppler (5) und einen Slave-Kommunikationskoppler (6). . In Ausführungsbeispielen ist mindestens eines der anderen/weiteren Geräte im Verbund ebenfalls ein solches Steuerungssystem 100, 101 gemäß Ausführungsbeispielen, das dabei typischerweise als Slave fungiert, und das erste System als Master.

In dem Ausführungsbeispiel der Fig. 1 ist wenigstens eine zweite Steuereinheit 2 vorgesehen, auch Sicherheits-Steuereinheit 2 genannt. Diese dient für die Steuerung von sicherheitskritischen Anwendungen und/oder sicherheitskritischen Anlagenkomponenten. Die Sicherheits-Steuereinheit 2 umfasst mindestens eine Master-Sicherheits-Untereinheit 2a und/oder mindestens eine Slave-Sicherheits-Untereinheit 2b, die typischerweise in Programmlogik realisiert sind. Die Sicherheits-Steuereinheit 2 kommuniziert über ein Dual-Port-RAM und den internen Kopplerbus B1 mittels bzw. über die nichtsicherheitskritische Steuereinheit 1 direkt mit mindestens einem der Kommunikationskoppler 5, 6.

Auch die Steuereinheit 1, die für die Steuerung nicht sicherheitskritischer Prozesse und/oder nicht sicherheitskritischer Anlagenkomponenten ausgelegt ist, umfasst jeweils Untereinheiten mit Master-Funktionalität la und Untereinheiten mit Slave-Funktionalitäten 1b.

Ein- und Ausgabeeinheiten umfassen typischerweise sowohl sichere Einheiten 21, 72, 82 als auch nicht-sichere Einheiten 11, 71, 81, wobei die nicht-sicheren Einheiten 11, 71, 81 von der ersten Steuereinheit 1 ohne Sicherheitsfunktion, und die sicheren Einheiten 21, 72, 81 von der Sicherheits-Steuereinheit 2 mit Sicherheitsfunktion gesteuert werden können.

Die sicheren und nicht-sicheren Steuereinheiten 1, 2 kommunizieren miteinander über einen internen Kopplerbus B1 und einen in die zweite Steuereinheit 2 integrierten Dual-Port-RAM DPR1, sowie über den internen Kopplerbus B1 und mittels der Master- bzw. Slave-Kommunikationskoppler 5, 6 mit beliebigen, an den Feldbus FB angeschlossenen anderen, bevorzugt dezentralen Einheiten.

Sowohl die direkt mit dem Modul für die Zentraleinheit CL verbundenen Module der zentralen Eingabe-/Ausgabeeinheiten 11, 21, als auch die Module der dezentralen Einheiten 7, 8, 71, 72, 81, 82 können, wie bereits angeführt, entsprechend ihrer Funktion sowohl als sicherheitsgerichtete als auch nicht-sicherheitsgerichtete Geräte ausgeführt sein. Sie sind typischerweise als Slaves konfiguriert.

Die Zentraleinheit CL kann, wie auch die die Eingabe-/Ausgabeeinheiten 11, 21 und die Kommunikationskoppler 5, 6, mittels eines Modulträgers auf einer unterschiedlich ausbaufähigen Grundplatte angeordnet sein, wobei die Eingabe-/Ausgabeeinheiten 11, 21 direkt an die Zentraleinheit CL und die Kommunikationskoppler 5, 6 ankoppelbar sind. Die Grundplatte weist weiterhin wenigstens einen Steckplatz für einen Koppler zum Feldbusanschluss für eine Standard-Feldbusverbindung zu den dezentralen Einheiten 7, 8 und/oder Stationen auf.

In einer besonderen Ausgestaltung ist die Grundplatte auf eine Norm-Hutschiene aufgeschnappt, wobei wenigstens eine der Eingabe-/Ausgabeeinheiten 11, 21 ebenfalls auf die Hutschiene aufschnappbar und mit der jeweiligen Grundplatte elektrisch und mechanisch zusammensteckbar ist.

Vorteilhaft erweist sich weiterhin, dass Module der Zentraleinheit CL, der Eingabe-/ Ausgabeeinheiten 11, 21 und die Master-/Slave-Kommunikationskoppler 5, 6 alle untereinander kabellos über Steckverbindungen elektrisch verbindbar sind bzw. verbunden sind. Vorzugsweise sind die Zentraleinheit CL, die Eingabe-/Ausgabeeinheiten 11, 21 und die Master-/Slave-Kommunikationskoppler 5, 6 jeweils mittels Steck- und/oder Rastmitteln lösbar miteinander verbindbar oder verbunden.

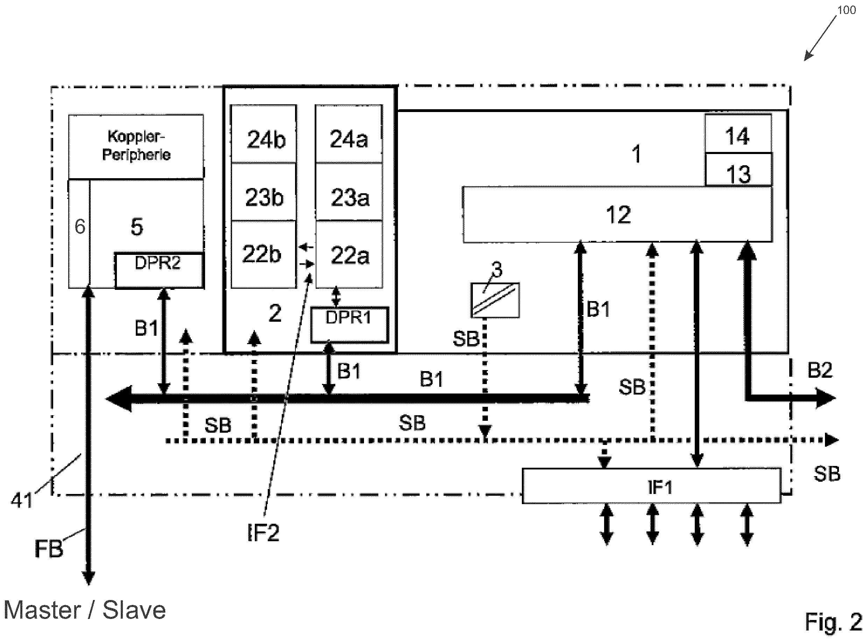

Fig. 2 zeigt eine detaillierte Ausführungsform eines modular aufgebauten Steuerungssystems 100 gemäß Ausführungsbeispielen. Es umfasst typischerweise einen Klemmenblock (nicht dargestellt) mit integrierter Ethernet- und/oder serieller Schnittstelle IF1 und die erste Steuereinheit 1, die über den internen Ein-/Ausgabekopplerbus B1 mit der als Sicherheits-Steuereinheit 2 ausgeführten zweiten Steuereinheit und den Master-Kommunikationskoppler 5 und/oder dem Slave-Kommunikationskoppler 6 kommuniziert - von denen in Ausführungsbeispielen nur jeweils einer der Kommunikationskoppler (Master oder Slave), oder beide (Master und Slave) realisiert sein können, letzteres auch in einem gemeinsamen Modul. Das Modul der ersten Steuereinheit 1 ist mit einer Spannungsversorgungseinheit 3 ausgestattet, welche über eine Verbindungsleitung SB mit der ersten und der zweiten Steuereinheit 1, 2 sowie den Kommunikationskopplern 5, 6 elektrisch verbunden ist. An die Verbindungsleitung SB sind auch weitere auf der Grundplatte angeordnete Geräte, wie beispielsweise die zentralen Eingabe-/Ausgabeeinheiten 11, 21, elektrisch anschließbar.

Die erste Steuereinheit 1 weist neben einem Taktgeber 14 und einem Speicher 13, einen ersten Mikroprozessor 12 auf, der über den internen Ein-/Ausgabekopplerbus B1 mit dem wenigstens einem Master-Kommunikationskoppler 5 und/oder Slave-Kommunikationskoppler 6 über ein diese umfassendes Kommunikationskoppler-Modul integrierten weiteren Dual-Port-RAM DPR2 kommuniziert. Die Verbindung zu den zentralen Eingabe-/Ausgabeeinheiten 11, 21 (nicht in der Fig. 2 gezeigt) wird über den internen Ein-/Ausgabebus B2 realisiert.

Für die Anwendung des Steuerungssystems auch für sicherheitskritische Anwendung ist auf der Grundplatte die Sicherheits-Steuereinheit 2 vorgesehen, die wenigstens zwei weitere, als Sicherheitsprozessoren ausgeführte, Verarbeitungseinheiten 22a, 22b mit zugeordneten Speichern 23a, 23b und Taktgebern 24a, 24b aufweist. Die Prozessoren 22a, 22b synchronisieren sich untereinander über eine weitere Schnittstelle IF2. Der Aufbau der Prozessoren 22a, 22b und ihre Funktionsweise ist aus dem einschlägigen Stand der Technik bekannt.

In der beschriebenen 1oo2-Architektur ist der erster Prozessor 22a, welcher direkt auf das Dual-Port-RAM DPR1 zugreift, nicht in der Lage, eine Cyclic Redundancy Checksum (CRC) zu ermitteln, die zum Generieren von gültigen Telegramme über die Schnittstelle des Dual-Port-RAMs DPR1 notwendig ist. Diese CRC-Ermittlung kann nur von dem redundanten Prozessor 22b durchgeführt und zum bzw. an den ersten Prozessor 22a mitgeteilt werden. Hiermit wird sichergestellt, dass beide Prozessoren 22a, 22b an gültigen Telegrammen mitwirken. Dies ist erforderlich, um die Sicherheit des Systems beim Ausfall oder fehlerhafter Funktionsweise eines der beiden Prozessoren 22a, 22b der Sicherheits-Steuereinheit 2 zu gewährleisten.

Über den im Kommunikationskoppler-Modul integrierten weiteren Dual-Port-RAM DPR2 werden die sicherheitsgerichteten Telegramme von der Sicherheits-Steuereinheit 2 von und zu den dezentralen Ein-/Ausgabeeinheiten 71, 72, 81, 82, und/oder zu den Remote- und weiteren Geräten bzw. Stationen am Feldbus FB typischerweise unter Nutzung des vorgenannten "Black-Channel-Kommunikationsprinzips" übertragen. Dazu werden die Telegramme über den Feldbus FB und die (typisch) Feldbus-Slaves 7, 8 zu den Ein-/Ausgabeeinheiten 71, 72, 81, 82 geführt.

Die Sicherheits-Steuereinheit 2 kommuniziert über ihr Dual-Port-RAM DPR1 und über den internen Kopplerbus B1 über die nicht-sicherheitskritische erste Steuereinheit 1 mit dem Master-Kommunikationskoppler 5 oder den Slave-Kommunikationskoppler 6 via dem integrierten Dual-Port-RAM DPR2. Die Kommunikation wird typischer-, aber nicht notwendigerweise ebenfalls unter Nutzung des vorgenannten Black-Channel-Kommunikationsprinzips ausgeführt.

In den weiteren Prozessoren 22a, 22b der Sicherheits-Steuereinheit 2 wird eine Sicherheits-Programmlogik ausgeführt. Im Mikroprozessor 12 der ersten Steuereinheit 1 wird davon getrennt eine nicht-sicherheitsgerichtete Programmlogik ausgeführt. Der Datenaustausch der Daten zwischen der Sicherheits-Steuereinheit 2 und der ersten Steuereinheit 1 für die nicht sicherheitskritischen Anwendungen erfolgt mittels der vordefinierten Schnittstelle über den in der Sicherheits-Steuereinheit angeordneten ersten Dual-Port-RAM DPR1. Die vorgenannten Prozesse laufen, wie oben geschildert, entsprechend der Konfiguration des Steuerungssystems 100 jeweils zwischen der Master-Sicherheits-Untereinheit 2a und der Master-Untereinheit 1a, oder zwischen der Slave-Sicherheits-Untereinheit 2b und der Slave-Untereinheit 1b. Diese jeweiligen Untereinheiten der ersten Steuereinheit 1 und der Sicherheits-Steuereinheit 2 sind in Fig. 2 aus illustrativen Gründen nicht dargestellt, da diese typischer-, aber nicht notwendigerweise nur in Programmlogik, in anderen Fällen auch in Hardware realisiert sein können.

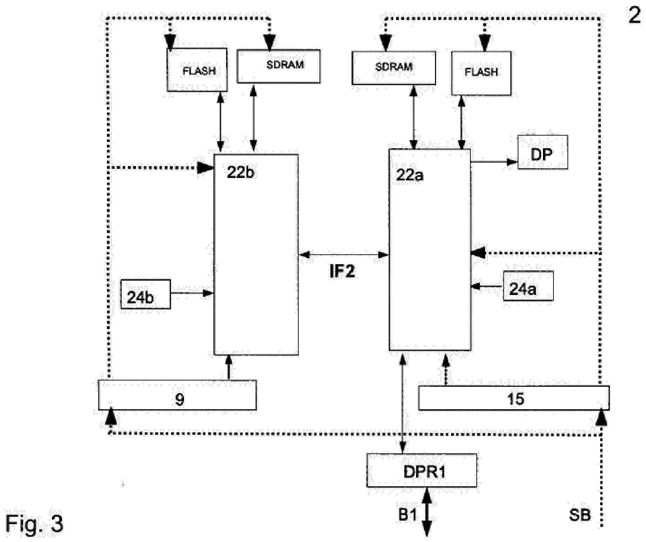

Fig. 3 zeigt eine Ausführungsform der Sicherheits-Steuereinheit 2 als 1oo2 Systemarchitektur mit den Mikroprozessoren 22a, 22b, sowie mit den jeweils eigenen mit den Prozessoren 22a, 22b zusammenwirkenden nullspannungssicheren Speichern FLASH, die vorzugsweise als Ablage für ein Anwenderprogramm vorgesehen sind, und den flüchtigen Speichern SDRAM, die vorzugsweise als Datenspeicher vorgesehen sind. Die Mikroprozessoren 22a, 22b arbeiten jeweils mit einem eigenen Taktgeber 24a, 24b zusammen. Weiterhin sind typischerweise Anzeigemittel DP zur Anzeige von Zustands- und Fehlermeldungen vorgesehen, welche vorzugsweise nur mit dem ersten Prozessor 22a direkt verbunden sind. Die Master-Sicherheits-Untereinheit 2a und die Slave-Sicherheits-Untereinheit 2b der Sicherheits-Steuereinheit 2 sind im Beispiel in Programmlogik ausgeführt und somit nicht explizit dargestellt.

Von den beiden Prozessoren 22a, 22b der Sicherheits-Steuereinheit 2 ist nur der erste Prozessor 22a über den ersten Dual-Port-RAM DPR1 direkt mit dem internen Kopplerbus B1 (siehe Fig. 2) verbunden.

In einer vorteilhaften Ausgestaltung sind die Prozessoren 22a, 22b der Sicherheits-Steuereinheit 2 so ausgeführt, dass sie sich gegenseitig überwachen. Dazu synchronisieren sich die Prozessoren 22a, 22b untereinander über die weitere Schnittstelle IF2. Die Überwachungs- und Synchronisationsmechanismen können beispielsweise nach "PROFIsafe ― Profile for Safety Technology on PROFIBUS DP and PROFINET IO Profile part, related to IEC 61784-3-3 Specification for PROFIBUS and PROFINET. Version 2.4, March, 2007, Order No: 3.192b" oder ähnlich ausgeführt werden.

Die Spannungsversorgung SB sowohl für die beiden Prozessoren 22a, 22b, die Speicher FLASH, SDRAM als für die jeweils mit den Prozessoren 22a, 22b verbundenen Spannungsversorgungsüberwachungs- und Diagnoseeinheiten 9, 15 wird über die Verbindungsleitung SB bereitgestellt.

Für die in der Sicherheits-Steuereinheit 2 befindlichen Prozessoren 22a, 22b ist typischerweise in Ausführungsbeispielen jeweils eine eigene separate Spannungsversorgungsüberwachungs- und Diagnoseeinheit 9, 15 vorgesehen.

Fig. 4 zeigt ein Steuerungssystem 100 wie das in der Fig. 1 gezeigte, das mittels des Master-Kommunikationskopplers 5 über einen Feldbus FB mit einem weiteren Steuerungssystem 101 gemäß Ausführungsbeispielen verbunden ist. Dieses ist über seinen Slave-Kommunikationskoppler 6 an den Feldbus FB angebunden. Zusätzlich steuert das Steuerungssystem 100, ähnlich wie in Fig. 1 gezeigt, einen dezentralen Feldbus-Slave 8 und mit diesem verbundene Eingabe-/Ausgabeeinheiten 81, 82.

Bei dem Steuerungssystem 100, 101 übernimmt die erste Steuereinheit 1, die Nicht-Sicherheitssteuerung, die Aufgabe, Sicherheitstelegramme von der Sicherheits-Steuereinheit 2 mit dem Sicherheits-Kommunikations-Master 2a und dem Sicherheits-Kommunikations-Slave 2b zu dem Master-Kommunikationskoppler 5 oder dem Slave-Kommunikationskoppler 6 zu leiten. Sie benutzt dazu den internen Kopplerbus B1. Die Sicherheits-Steuereinheit 2 führt die Sicherheitsprogrammlogik aus und enthält Sicherheits-Kommunikations-Master-Funktionalität und Sicherheits-Kommunikations-Slave-Funktionalität. Die Nicht-Sicherheitssteuerung 1 führt eine Nicht-Sicherheits-Programmlogik separat aus. Der Programmdatenaustausch zwischen der Sicherheits- und Nicht-Sicherheitssteuerung wird über die vordefinierte Schnittstelle durch das Dual-Port-RAM unterstützt. Nur einer der Mikroprozessoren in der Sicherheitssteuerung hat Zugriff auf den Dual-Port-RAM.

Um den sicherheitsrelevanten und nicht sicherheitsrelevanten Datenaustausch zwischen einem oder mehreren Steuerungssystemen 100, 101 zu ermöglichen, muss jedes Steuerungssystem 100, 101 über Sicherheits-Kommunikations-Master-Funktionalität und Sicherheits-Kommunikations-Slave-Funktionalität verfügen. Im Beispiel der Figur 4 hat demnach jedes Steuerungssystem 100, 101 einen Master-Kommunikationskoppler 5 und einen Slave-Kommunikationskoppler 6. Auf diese Weise können verschiedene Steuersysteme 100, 101 gleichzeitig Sicherheits-Kommunikations-Master-Funktionalität und Sicherheits-Kommunikations-Slave-Funktionalität umfassen und, wenn sie richtig konfiguriert und verbunden sind, sowohl Sicherheits- als auch Nicht-Sicherheitsdaten austauschen.

Im folgenden soll das an zwei Beispielen näher erläutert werden.

In einem ersten Beispiel erfolgt der Datentransfer von der Nicht-Sicherheitssteuerung 1 in einem ersten Steuerungssystem 100 zum Kommunikations-Master-Koppler 5 des ersten Steuerungssystems 100, dann über den Feldbus zum Slave-Kommunikationskoppler 6' des zweiten Steuerungssystems 101, von dort durch die Nicht-Sicherheitssteuerung 1' in dem zweiten Steuerungssystem 101 zum Kommunikations-Master-Koppler 5' des zweiten Steuerungssystems 101 und dann weiter zu einem entfernten Kommunikationsslave 8 und an dieses angeschlossene Eingabe/Ausgabeeinheiten 81, 82, mit einer non-safety I/O-Einheit 81 und einer Safety-I/O-Einheit 82.

In einem zweiten Beispiel ist eine Sicherheitskommunikation implementiert. Hierbei werden die Daten von der Sicherheitssteuerung 2 mit Sicherheits-Kommunikations-Master 2a in dem ersten Steuerungssystem 100 an die Nicht-Sicherheitssteuerung 1 in dem ersten Steuerungssystem 100 und dann weiter an den angeschlossenen Master-Kommunikationskoppler 5 übertragen. Von dort geht es über den Feldbus FB zum Slave-Kommunikationskoppler 6' des zweiten Steuerungssystems 101, und dann über die Nicht-Sicherheitssteuerung 1' an die Sicherheitssteuerung 2' mit der Sicherheits-Kommunikations-Slave -Funktionalität 2b', und von dort weiter zu dem Sicherheits-Kommunikations-Master 2a' als Teil des Sicherheitscontrollers 2', und dann zurück zu der Nicht-Sicherheitssteuerung 1 'und von dort weiter zu dem angeschlossenen Kommunikations-Master-Koppler 5' des zweiten Steuerungssystems 101 und dann weiter zu einem entfernten Kommunikations-Slave 8 mit der entfernten Sicherheits-I / O-Einheit 82, die eine Sicherheits-Slave-Kommunikation unterstützen.

Die Sicherheitssteuerungen 2, 2' umfassen erfindungsgemäß sowohl Sicherheits-Kommunikations-Master-Funktionalitäten 2a, 2a' als auch Kommunikations-Slave-Funktionalitäten 2b, 2b'. Somit kann in Abhängigkeit von der Anforderung an das gegebene Steuerungssystem geeignet ausgewählt werden, ob ein erfindungsgemäßes Steuerungssystem 100, 101 z. B. nur Sicherheits-Kommunikations-Master-Funktionalität, nur Sicherheits-Kommunikations-Slave-Funktionalität oder beides haben soll.

## Patentansprüche

1. Steuerungssystem (100, 101) zum Steuern von sicherheitskritischen und nichtsicherheitskritischen Prozessen und/oder Anlagenkomponenten, umfassend:
- mindestens eine Steuereinheit (1), die für die Steuerung nicht sicherheitskritischer Prozesse und/oder nicht sicherheitskritischer Anlagenkomponenten ausgelegt ist,
- mindestens eine Sicherheits-Steuereinheit (2), die ausgelegt ist für die Steuerung sicherheitskritischer Prozesse und/oder sicherheitskritischer Anlagenkomponenten,
- mindestens eine Eingabe/Ausgabeeinheit (11), (21), die über einen internen Ein-/Ausgabebus (B2) mit der Steuereinheit (1) verbunden ist,
wobei das Steuerungssystem modular konfigurierbar ist,
**dadurch gekennzeichnet, dass** das Steuerungssystem (100, 101) ausgelegt ist, in einem über Feldbus (FB) verbundenen Verbund mit anderen Geräten als Kommunikations-Master und als Kommunikations-Slave zu agieren, und dazu einen Master-Kommunikationskoppler (5) und einen Slave-Kommunikationskoppler (6),umfasst,
und wobei die Sicherheits-Steuereinheit (2) jeweils Untereinheiten mit Master-Funktionalität (2a) und Untereinheiten mit Slave-Funktionalitäten (2b) aufweist und die Steuereinheit (1) jeweils Untereinheiten mit Master-Funktionalität (1a) und Untereinheiten mit Slave-Funktionalitäten (1b) aufweist.

2. Steuerungssystem gemäß Anspruch 1, wobei die jeweiligen Untereinheiten (2a, 2b, 1a, 1b) in Programmlogik realisiert sind, die in einem nicht-flüchtigen Speicher bereitgestellt ist.

3. Steuerungssystem nach einem der vorhergehenden Ansprüche, wobei die Sicherheits-Steuereinheit (2) über einen internen Kopplerbus (B1) mit der Steuereinheit (1) kommuniziert, und wobei die Steuereinheit (1) ausgelegt ist, Daten von der Sicherheits-Steuereinheit (2) an den Kommunikationskoppler (5) über den internen Kopplerbus (B1) zu übermitteln.

4. Steuerungssystem nach einem der vorhergehenden Ansprüche, als Eingabe/ Ausgabeeinheiten umfassend sowohl sicherheits-gerichtete Einheiten (21), (72), (82) als auch nicht-sicherheitsgerichtete Eingabe/Ausgabeeinheiten (11), (71), (81), wobei die nicht-sicherheitsgerichteten Eingabe/Ausgabeeinheiten (11), (71), (81) von der ersten Steuereinheit (1), und die sicherheits-gerichteten Eingabe/Ausgabeeinheiten (21), (71), (82) von der Sicherheits-Steuereinheit (2) steuerbar sind.

5. Steuerungssystem nach Anspruch 4, wobei der Master-Kommunikationskoppler (5) dafür vorgesehen ist, sicherheits-gerichtete Telegramme von und zu den dezentralen Ein-/Ausgabeeinheiten (71), (72), (81), (82) und/oder zu Remote-Stationen unter Nutzung des Black-Channel-Kommunikationsprinzips zu übertragen.

6. Steuerungssystem nach Anspruch 5, wobei die sicherheits-gerichteten Telegramme über Feldbus-Slaves (7), (8) zu den dezentralen Ein/Ausgabeeinheiten (71), (72), (81), (82) geführt werden.

7. Steuerungssystem nach einem der Ansprüche 3 - 6 wobei
- die Sicherheits-Steuereinheit (2) zur Bereitstellung der sicherheitsgerichteten Funktionen wenigstens zwei Prozessoren (22a), (22b) und einen ersten Dual-Port-RAM (DPR1) aufweist, wobei nur einer der beiden Prozessoren (22a) mit dem ersten Dual-Port-RAM (DPR1) verbunden ist, und
- die Sicherheits- Steuereinheit (2) dazu eingerichtet ist, über den ersten Dual-Port-RAM (DPR1) und den internen Kopplerbus (B1) mit der Steuereinheit (1) zu kommunizieren und die Steuereinheit (1) dazu eingerichtet ist, die Daten von der Sicherheits-Steuereinheit (2) an den Kommunikationskoppler (5) über den internen Kopplerbus (B1) und einen weiteren im Kommunikationskoppler (5) integrierten Dual-Port-RAM (DPR2) zu übermitteln, und wobei die Dual-Port-RAMs (DPR1), (DPR2) vorzugsweise vordefinierte Standardschnittstellen aufweisen.

8. Steuerungssystem nach einem der vorstehenden Ansprüche, **dadurch gekennzeichnet, dass** die Prozessoren (22a), (22b) der Sicherheits-Steuereinheit (2) so ausgeführt sind, dass sie sich gegenseitig überwachen und synchronisieren.

9. Verwendung des Steuerungssystems (100, 101) gemäß einem der vorhergehenden Ansprüche als:
- Steuerungssystem mit Master-Funktionalität in einem Automatisierungssystem, das mindestens ein weiteres Steuerungssystem mit Slave-Funktionalität gemäß einem der vorhergehenden Ansprüche aufweist, oder
- als dezentrale Verarbeitungseinrichtung in einem Automatisierungssystem wie vor.

## Claims

1. A control system (100, 101) for controlling safety-critical and non-safety-critical processes and/or installation components, comprising:
- at least one control unit (1), configured to control non-safety-critical processes and/or non-safety-critical plant components,
- at least one safety control unit (2), configured for controlling safety-critical processes and/or safety-critical installation components,
- at least one input/output unit (11), (21), connected to the control unit (1) via an internal input/output bus (B2),
wherein the control system is modularly configurable
**characterized in that** the control system (100, 101) is configured to act as a communication master and as a communication slave in an interconnection with other devices connected via fieldbus (FB), and for this purpose comprises a master communication coupler (5) and a slave communication coupler (6),and wherein the safety control unit (11, 21) is configured to act as a communication master and as a communication slave in an interconnection with other devices connected via fieldbus (FB),
and wherein the safety control unit (2) comprises respective subunits with master functionality (2a) and subunits with slave functionality (2b), and the control unit (1) comprises respective subunits with master functionality (1a) and subunits with slave functionality (1b).

2. The control system according to claim 1, wherein the respective subunits (2a, 2b, 1a, 1b) are realized in program logic provided in a non-volatile memory.

3. The control system according to any one of the preceding claims, wherein the safety control unit (2) is configured to communicate with the control unit (1) via an internal coupler bus (B1), and wherein the control unit (1) is configured to transmit data from the safety control unit (2) to the communication coupler (5) via the internal coupler bus (B1).

4. The control system according to any one of the preceding claims, as input/output units comprising both safety-oriented units (21), (72), (82) and non-safety-oriented input/output units (11), (71), (81), wherein the non-safety-oriented input/output units (11), (71), (81) are controllable by the first control unit (1), and the safety-oriented input/output units (21), (71), (82) are controllable by the safety control unit (2).

5. The control system according to claim 4, wherein the master communication coupler (5) is configured to transmit safety-oriented messages to and from the local input/output units (71), (72), (81), (82) and/or to remote stations by using the black channel communication principle.

6. The control system according to claim 5, wherein the safety-oriented telegrams are routed via fieldbus slaves (7), (8) to the local input/output units (71), (72), (81), (82).

7. The control system according to any of claims 3-6, wherein
- the safety control unit (2) comprises at least two processors (22a), (22b) and a first dual-port RAM (DPR1) to provide the safety-oriented functions, wherein only one of the two processors (22a) is connected to the first dual-port RAM (DPR1), and
- the safety control unit (2) is configured to communicate with the control unit (1) via the first dual-port RAM (DPR1) and the internal coupler bus (B1), and the control unit (1) is configured to transmit the data from the safety control unit (2) to the communication coupler (5) via the internal coupler bus (B1) and a further dual-port RAM (DPR2) integrated in the communication coupler (5)
and wherein the dual port RAMs (DPR1), (DPR2) preferably have predefined standard interfaces.

8. The control system according to any of the preceding claims, **characterized in that** the processors (22a), (22b) of the safety control unit (2) are configured such that they monitor and synchronize each other.

9. A use of the control system (100, 101) according to any of the preceding claims as:
- control system with master functionality in an automation system comprising at least one further control system with slave functionality according to any one of the preceding claims, or
- as a local processing device in an automation system as before.

## Revendications

1. Système de commande (100, 101) destiné à commander des processus et/ou des composants d'équipement critiques pour la sécurité et non critiques pour la sécurité, comprenant :
― au moins une unité de commande (1), qui est conçue pour la commande de processus non critiques pour la sécurité et/ou de composants d'équipement non critiques pour la sécurité,
― au moins une unité de commande de sécurité (2), qui est conçue pour la commande de processus critiques pour la sécurité et/ou de composants d'équipement critiques pour la sécurité,
― au moins une unité d'entrée/sortie (11), (21), qui est reliée à l'unité de commande (1) par le biais d'un bus d'entrée/sortie interne (B2),
le système de commande étant configurable de manière modulaire,
**caractérisé en ce que** le système de commande (100, 101) est conçu pour, dans un groupement connecté par le biais d'un bus de terrain (FB) avec d'autres appareils, agir en tant que maître de communication et en tant qu'esclave de communication, et comporte à cet effet un coupleur de communication maître (5) et un coupleur de communication esclave (6),
et l'unité de commande de sécurité (2) possédant respectivement des sous-unités avec fonctionnalité de maître (2a) et des sous-unités avec fonctionnalités d'esclave (2b) et l'unité de commande (1) possédant respectivement des sous-unités avec fonctionnalité de maître (1a) et des sous-unités avec fonctionnalités d'esclave (1b).

2. Système de commande selon la revendication 1, les sous-unités (2a, 2b, 1a, 1b) respectives étant réalisées en logique de programme, laquelle est fournie dans une mémoire non volatile.

3. Système de commande selon l'une des revendications précédentes, l'unité de commande de sécurité (2) communiquant avec l'unité de commande (1) par le biais d'un bus de couplage (B1) interne et l'unité de commande (1) étant conçue pour communiquer des données de l'unité de commande de sécurité (2) au coupleur de communication (5) par le biais du bus de couplage (B1) interne.

4. Système de commande selon l'une des revendications précédentes, comprenant en tant qu'unités d'entrée/sortie à la fois des unités orientées sur la sécurité (21), (72), (82) et des unités d'entrée/sortie non orientées sur la sécurité (11), (71), (81), les unités d'entrée/sortie non orientées sur la sécurité (11), (71), (81) pouvant être commandées par la première unité de commande (1) et les unités d'entrée/sortie orientées sur la sécurité (21), (71), (82) pouvant être commandées par l'unité de commande de sécurité (2).

5. Système de commande selon la revendication 4, le coupleur de communication maître (5) étant prévu pour transmettre des télégrammes orientés sur la sécurité depuis et vers les unités d'entrée/sortie décentralisées (71), (72), (81), (82) et/ou vers des stations distantes en utilisant le principe de communication par « canal noir ».

6. Système de commande selon la revendication 5, les télégrammes orientés sur la sécurité étant guidés vers les unités d'entrée/sortie décentralisées (71), (72), (81), (82) par le biais d'esclaves de bus de terrain (7), (8) .

7. Système de commande selon l'une des revendications 3 à 6, avec lequel
― l'unité de commande de sécurité (2) possède au moins deux processeurs (22a), (22b) et une première RAM à double port (DPR1) pour la mise à disposition des fonctions orientées sur la sécurité, un seul des deux processeurs (22a) étant relié à la première RAM à double port (DPR1), et
― l'unité de commande de sécurité (2) est conçue pour communiquer avec l'unité de commande (1) par le biais de la première RAM à double port (DPR1) et du bus de couplage (B1) interne, et l'unité de commande (1) est conçue pour communiquer les données de l'unité de commande de sécurité (2) au coupleur de communication (5) par le biais du bus de couplage (B1) interne et d'une RAM à double port supplémentaire (DPR2) intégrée dans le coupleur de communication (5), et les RAM à double port (DPR1), (DPR2) possédant de préférence des interfaces normalisées prédéfinies.

8. Système de commande selon l'une des revendications précédentes, **caractérisé en ce que** les processeurs (22a), (22b) de l'unité de commande de sécurité (2) sont réalisés de telle sorte qu'ils se surveillent et se synchronisent mutuellement.

9. Utilisation du système de commande (100, 101) selon l'une des revendications précédentes en tant que :
― système de commande avec fonctionnalité de maître dans un système d'automatisation qui possède au moins un système de commande supplémentaire selon l'une des revendications précédentes avec fonctionnalité d'esclave, ou
― dispositif de traitement décentralisé dans un système d'automatisation tel que précédemment.
